# FASCICULE DE BREVET EUROPEEN

(11) **EP 3 377 390 B1**
(45) Date de publication et mention de la délivrance du brevet: **08.01.2020**
(21) Numéro de dépôt: 16805009.4
(22) Date de dépôt: 09.11.2016
(51) Int. Cl.: B62D 31/02

(54) **OSSATURE OPTIMISÉE POUR VÉHICULE TERRESTRE DE TRANSPORT EN COMMUN DE PASSAGERS, ET VÉHICULE COMPRENANT UNE TELLE OSSATURE**
OPTIMIERTER STRUKTUR FÜR EIN LANDFAHRZEUG FÜR DEN ÖFFENTLICHEN PERSONENVERKEHR UND FAHRZEUG MIT SOLCH EINER STRUKTUR
OPTIMISED STRUCTURE FOR A LAND VEHICLE FOR PUBLIC PASSENGER TRANSPORT, AND VEHICLE COMPRISING SUCH A STRUCTURE

(30) Priorité: 16.11.2015 FR 1560974
(43) Date de publication de la demande: 26.09.2018
(73) Titulaire: Bluebus, 29500 Ergue Gaberic (FR)
(72) Inventeur: BESSON, Patrice, 69970 Marennes (FR); SAUVAGET, Thierry, 69780 Toussieu (FR)
(74) Mandataire: IPAZ
(86) Numéro de dépôt international: PCT/EP2016/077104
(87) Numéro de publication internationale: WO 2017/084932

(56) Documents cités:
- CN-B- 102 582 689
- DE-A1-102006 022 259
- DE-A1-102007 018 183
- GB-A- 404 073
- GB-A- 606 692
- US-A- 3 577 903

## Description

La présente invention concerne une ossature optimisée pour véhicule terrestre de transport en commun de passagers, en particulier de type bus ou tram-bus. Elle concerne également un véhicule terrestre de transport en commun de passagers, en particulier électrique, comprenant une telle ossature.

Le domaine de l'invention est le domaine des véhicules terrestres de transport en commun, notamment électriques, de type bus, car ou tram-bus.

### Etat de la technique

Un des moyens de transport en commun le plus prisé est le bus, car sa mise en place ne nécessite pas d'infrastructure spécifique, de type voie ferrée par exemple. Pour diminuer encore plus la pollution liée aux transports en commun, les bus électriques font leur apparition encouragée à la fois par la prise de conscience des utilisateurs mais également par des mesures administratives incitatives favorisant l'achat et l'utilisation des véhicules électriques. On assiste également à l'apparition et au développement des tram-bus. Ainsi, le nombre de bus, électriques ou non, augmente sans cesse.

Les bus actuels sont construits par assemblage de nombreuses pièces formant au final l'ossature du bus qui est l'élément principal du bus. L'ossature est ensuite habillée, puis équipée. Le bus est construit au fur et à mesure, par ajout de pièces, telles que des barres ou des tubes, individuellement les unes après les autres. La fixation d'une pièce individuelle aux autres est réalisée par boulonnage ou par soudage.

Or, l'architecture actuelle des ossatures de bus, et plus généralement des véhicules terrestres de transport en commun sur route, ne permet pas une production à grande échelle tout en permettant une flexibilité de conception pour le véhicule. De plus, les ossatures actuelles pour véhicules de transport en commun sont complexes et chronophages à fabriquer. Enfin, elles présentent un rapport habitabilité/tenue mécanique qui n'est pas satisfaisant.

Le DE 10 2006 022259 A1 divulgue une ossature pour véhicule terrestre de transport avec toutes les caractéristiques du préambule de la revendication indépendante 1.

D'autres exemples figurent dans les documents GB 606 692A, GB 404 073 A, DE 10 2007 018183 A1, CN 102 582 689 B et US 3 577 903 A.

Un but de la présente invention est de remédier à ces inconvénients.

Un autre but de l'invention est de proposer une ossature pour véhicule terrestre de transport en commun adaptée à une production à grande échelle tout en permettant une flexibilité de conception pour ledit véhicule.

Un autre but de l'invention est de proposer une ossature pour véhicule terrestre de transport en commun moins complexe et plus rapide à fabriquer.

Il est aussi un but de l'invention de proposer une ossature pour véhicule terrestre de transport en commun présentant un rapport habitabilité/tenue mécanique amélioré.

### Exposé de l'invention

L'invention permet d'atteindre au moins l'un de ces buts par une ossature pour véhicule terrestre de transport en commun de passagers, en particulier sur route, et en particulier de type bus, caractérisée en ce qu'elle comprend au moins deux anneaux rigides faisant le tour de ladite ossature dans le sens de la largeur, autour d'un habitacle défini par ladite ossature.

Ainsi, l'invention propose une ossature formée par des anneaux rigides qui sont reliés entre eux par des éléments de liaison. Une telle ossature permet une fabrication plus rapide et industrialisable.

De plus, une telle architecture est relativement simple comparée à l'architecture de l'ossature des véhicules actuels.

Par ailleurs, une telle ossature permet une conception flexible de véhicules, car il est possible d'ajouter ou d'enlever un ou des anneaux rigides pour modifier la longueur du véhicule et ainsi de personnaliser le véhicule à la demande et en fonction du besoin. Il est par exemple possible de concevoir des véhicules de longueurs différentes. Il est également possible de modifier la position et le nombre de portes ou des passages de roues.

En outre, les anneaux rigides permettent une tenue mécanique accrue comparée à d'autres architectures actuellement utilisées. Ainsi, il est possible de diminuer l'épaisseur et la quantité de pièces composant l'ossature, et ainsi d'augmenter l'habitabilité et de diminuer le poids et le coût de l'ossature à tenue mécanique identique.

Dans la présente demande, un « tram-bus » désigne un véhicule électrique terrestre de transport en commun monté sur roues et qui se recharge à chaque station, afin de ne pas nécessiter des infrastructures lourdes de type rails, caténaires, sur la voirie. Un tel véhicule électrique se recharge à chaque station au moyen d'éléments de charge de la station et d'un connecteur reliant ledit véhicule à ladite station.

Selon l'invention, au moins un, en particulier chaque, anneau est obtenu par assemblage, en particulier par soudage, d'une partie supérieur et d'une partie inférieure suivant un plan horizontal d'assemblage :
- perpendiculaire au plan formé par ledit anneau, et
- situé entre un bord supérieur et un bord inférieur dudit anneau et à distance desdits bords entre 7/10 et 9/10 de la hauteur totale d'anneau.

Ainsi, le plan d'assemblage se trouve dans un zone à la fois de moindre effort et qui ne gêne pas l'agencement sur l'ossature d'éléments tels que des ouvrants.

Suivant un exemple de réalisation nullement limitatif, l'ossature selon l'invention peut comprendre un nombre d'anneaux rigides compris entre 2 et 15, et en particulier entre 7 et 12.

Un tel nombre permet de concevoir une multitude d'ossatures différentes couvrant la majorité des besoins en véhicules de transport en commun terrestre, en particulier sur route.

Avantageusement, au moins un, en particulier chaque, anneau peut définir un plan vertical perpendiculaire à au moins une, en particulier chacune, des parois latérales de ladite ossature.

La disposition parfaitement verticale des anneaux permet d'augmenter la tenue mécanique, surtout par rapport à des charges verticales, s'exerçant sur le toit ou le pavillon du véhicule de transport en commun, par exemple par des climatiseurs ou des modules de stockage d'énergie disposés sur le pavillon.

Avantageusement, au moins deux, en particulier tous les, anneaux peuvent être alignés les uns derrière les autres, chaque anneau définissant un plan parallèle au plan défini par au moins un autre anneau, en particulier par chacun des autres anneaux. Cela permet d'obtenir une ossature d'architecture et de fabrication encore plus simples, car les anneaux parallèles permettent une fabrication et un assemblage simplifiés.

Préférentiellement, au moins un, en particulier chaque, anneau peut présenter une largeur plus faible au niveau de son extrémité supérieure comparée au reste dudit anneau, et en particulier comparée à une extrémité inférieure dudit anneau.

Une telle forme permet d'augmenter encore plus la tenue mécanique et la résistance aux efforts verticaux s'exerçant sur l'ossature selon l'invention.

En particulier, au moins un, en particulier chaque, bord latéral d'au moins un, en particulier de chaque, anneau peut être incurvé ou recourbé vers l'intérieur dudit anneau au niveau d'une partie supérieure dudit anneau.

Plus particulièrement, chaque anneau peut présenter des bords latéraux qui sont sensiblement verticaux au niveau de la partie inférieure et de la partie centrale dudit anneau, et qui se recourbent l'un vers l'autre au niveau de la partie haute dudit anneau.

Préférentiellement, au moins un, en particulier chaque, coin d'au moins un, en particulier de chaque, anneau peut être arrondie de sorte que ledit coin ne présente pas de partie tranchante, ce qui présente moins de risque de blessure pour les opérateurs lors de la fabrication de ladite ossature.

Suivant encore un autre exemple de réalisation, au moins un, en particulier chaque, anneau peut être formé, en moins en partie, par assemblage de plusieurs pièces.

Dans ce cas, au moins une, en particulier chacune, desdites pièces peut avantageusement être connectée/reliée à au moins une autre pièce par assemblage de bout ou par une liaison mâle-femelle.

Un tel assemblage de bout ou mâle-femelle permet de diminuer le poids total de l'ossature car il permet de limiter, voire d'éliminer, les doublons et/ou le chevauchement des pièces lors de leur assemblage.

De plus, l'assemblage de bout permet d'augmenter l'espace dans l'habitacle, par rapport à une architecture dans laquelle les pièces formant l'ossature se chevauchent, au moins partiellement.

Plus généralement, l'assemblage d'au moins deux pièces d'un anneau peut être réalisé par soudage de bout, ou par boulonnage, ou encore par une liaison mâle femelle.

En outre, au moins un, en particulier chaque, anneau peut comporter au moins une forme ou pièce d'interconnexion, dite nœud, mâle ou femelle, pour relier ledit anneau avec un autre anneau ou une autre pièce de ladite ossature par une connexion de type mâle-femelle.

Un tel nœud mâle ou femelle permet de diminuer le poids total de l'ossature car il permet de limiter, voire d'éliminer, les doublons et/ou le chevauchement des pièces lors de leur assemblage.

Suivant un exemple de réalisation, au moins un, en particulier chaque, anneau peut comporter un bord supérieur sensiblement plat.

Un tel bord plat permet de concevoir une ossature dont la paroi supérieure est sensiblement plate et ne constitue pas de résistance au vent.

Alternativement ou en plus, au moins un, en particulier chaque, anneau peut comporter un bord supérieur replié/recourbé vers l'intérieur dudit anneau, en particulier à partir de chacun de ses coins supérieurs.

Un tel bord supérieur, recourbé/replié vers l'intérieur de l'anneau, peut être utilisé pour former, avec au moins un autre anneau similaire ou identique, un logement ou un compartiment au niveau d'une paroi supérieure de ladite ossature. Un tel logement peut par exemple servir à recevoir un module de stockage d'énergie, un climatiseur, etc. Un tel logement peut, en plus ou alternativement, former (ou être utilisé pour aménager) un conduit technique latéral ou longitudinal.

Selon l'invention, au moins un, en particulier chaque, anneau peut comporter au niveau de son extrémité supérieure :
- une première pièce de liaison, également appelée longeron, sensiblement horizontale, reliant des montants latéraux verticaux dudit anneau suivant une trajectoire sensiblement horizontale, ladite première pièce de liaison formant un bord supérieur extérieur sensiblement plat ; et
- une deuxième pièce de liaison, également appelée longeron, formant une trajectoire incurvée vers l'intérieur dudit anneau, en particulier à partir de chacun des coins supérieurs dudit anneau et reliant les montants latéraux verticaux dudit anneau, ladite deuxième pièce de liaison formant un bord supérieur intérieur recourbé vers l'intérieur de l'anneau.

Un tel anneau permet de concevoir une ossature dont la paroi supérieure comprend un logement ou un compartiment, tout en comportant une surface extérieure plate qui ne constitue pas de résistance au vent.

Bien entendu, les distances entre deux anneaux consécutifs, pris deux à deux, peuvent être identiques ou variables.

Par exemple, deux anneaux consécutifs peuvent se toucher et même servir d'interface de connexion entre deux modules d'ossature fabriqués séparément. De plus, deux anneaux consécutifs peuvent être disposés côte à côte pour, localement, augmenter la rigidité de l'ossature.

En outre, au sein d'une même ossature, deux anneaux peuvent être disposés à distance l'un de l'autre, par exemple dans des zones de moindre effort.

Préférentiellement, au moins un, en particulier chaque, anneau peut comporter un plan de symétrie verticale passant par le centre dudit anneau déterminé dans le sens de la largeur dudit anneau.

Un tel anneau permet de simplifier encore plus l'architecture de l'ossature et sa fabrication.

De plus, au moins un, en particulier chaque, anneau peut être réalisé, au moins en partie, en acier.

Dans ce cas, chaque anneau peut en outre être traité contre la corrosion par exemple, par cataphorèse.

Alternativement, au moins un anneau peut être réalisé en fibres de carbone, en aluminium, etc.

Avantageusement, pour au moins un anneau, l'ossature selon l'invention peut en outre comprendre au moins une pièce de fixation, dite jambe de renfort, prenant appui sur un montant latéral vertical dudit anneau et formant appui pour un montant supérieur, ou un bord supérieur, formant ledit anneau.

Une telle jambe de renfort vient renforcer l'anneau, en particulier au niveau d'un coin supérieur dudit anneau, de sorte à mieux résister aux charges verticales s'appliquant sur ledit anneau.

Dans une version préférée, l'ossature selon l'invention peut comprendre un profilé longitudinal, dit supérieur, de section fermée, reliant au moins deux, en particulier tous les, anneaux entre eux, au niveau d'au moins un, en particulier de chaque, coin supérieur de chacun desdits anneaux, ledit profilé supérieur comprenant :
- une première face pour la fixation d'au moins un longeron horizontal de chacun desdits anneaux formant un bord supérieur dudit anneau,
- une deuxième face pour la fixation d'un montant de chacun desdits anneaux formant un bord latéral dudit anneau.

Un tel profilé supérieur peut comprendre une face, dite extérieure, se trouvant entre ladite première face et ladite deuxième face et, en utilisation, du côté extérieur par rapport à l'habitacle. Ladite face extérieure peut comprendre au moins une surface, dite de fixation, pour la fixation d'un élément d'habillage extérieur, formant un décroché dans ladite face extérieure, vers l'intérieur dudit profilé supérieur.

Une telle surface de fixation permet une fixation facilitée et ergonomique d'un élément de d'habillage extérieur.

En outre, au moins l'une desdites première et deuxième faces peut être décalée par rapport à l'autre desdites faces suivant une direction perpendiculaire à ladite une face, de sorte que ladite autre face s'arrête avant ladite une face suivant ladite direction. Une telle architecture permet de réaliser une fixation plus robuste au niveau de la première face.

Le profilé supérieur peut être plein ou creux.

Dans une version préférée, l'ossature selon l'invention peut comprendre un profilé longitudinal, dit inférieur, de section fermée, reliant au moins deux anneaux entre eux, au niveau d'un, en particulier de chaque, coin inférieur de chacun desdits anneaux, ledit profilé inférieur comprenant :
- une première face pour la fixation d'au moins un longeron horizontal de chacun desdits anneaux formant un bord inférieur dudit anneau, et
- une deuxième face pour la fixation d'un montant de chacun desdits anneaux formant un bord latéral dudit anneau ;

Avantageusement, au moins l'une desdites faces peut être décalée par rapport à l'autre desdites faces suivant une direction perpendiculaire à ladite une face, de sorte que ladite autre face s'arrête avant, et à distance de ladite une face suivant ladite direction perpendiculaire.

Une telle architecture permet une fixation plus robuste car les faces de fixation sont décalées l'une par rapport à l'autre.

De plus, le ou chaque profilé inférieur peut comprendre une face, dite intérieure, se trouvant entre ladite première face et ladite deuxième face, et en utilisation, du côté de habitacle, ladite face intérieure étant recourbée vers l'intérieur dudit profilé inférieur.

Ainsi, la surface habitable au sein de l'ossature selon l'invention, et en particulier la hauteur et la largeur de l'ossature, est améliorée.

Le profilé inférieur peut être creux ou plein.

Suivant un autre aspect de la même invention, il est proposé un véhicule terrestre de transport en commun, en particulier sur route, comprenant une ossature selon l'invention.

Un tel véhicule peut être un véhicule hybride ou un véhicule électrique.

Un tel véhicule peut être un bus, un car, ou un tram-bus.

Le véhicule selon l'invention peut comprendre au moins un logement, aménagé dans l'épaisseur de la paroi supérieure, et prévu pour recevoir au moins un module de stockage d'énergie électrique, en particulier rechargeable.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'un véhicule selon l'invention ;
- les FIGURES 2-3 sont des représentations schématiques d'un exemple de réalisation d'une ossature selon l'invention ;
- les FIGURES 4-5 sont des représentations schématiques de deux exemples d'anneaux pouvant être mis en oeuvre dans une ossature selon l'invention ;
- les FIGURES 6a et 6b sont des représentations schématiques de deux exemples d'éléments d'interconnexion d'un anneau avec une autre pièce d'une ossature selon l'invention ;
- la FIGURE 7 est une représentation schématique d'un exemple de liaison non limitatif pouvant être mis en œuvre dans l'ossature selon l'invention ;
- la FIGURE 8 est une représentation d'un exemple d'assemblage non limitatif d'une partie haute et d'une parte basse d'un anneau pouvant être mis en œuvre dans une ossature selon l'invention ;
- la FIGURE 9 est une représentation schématique selon une vue de coupe d'un exemple non limitatif d'un profilé utilisé au niveau d'un coin supérieur d'un anneau d'une ossature selon l'invention ; et
- la FIGURE 10 est une représentation schématique selon une vue de coupe d'un exemple non limitatif d'un profilé utilisé au niveau d'un coin inférieur d'une ossature selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieur.

Sur les figures, les éléments communs à plusieurs figures conservent la même référence.

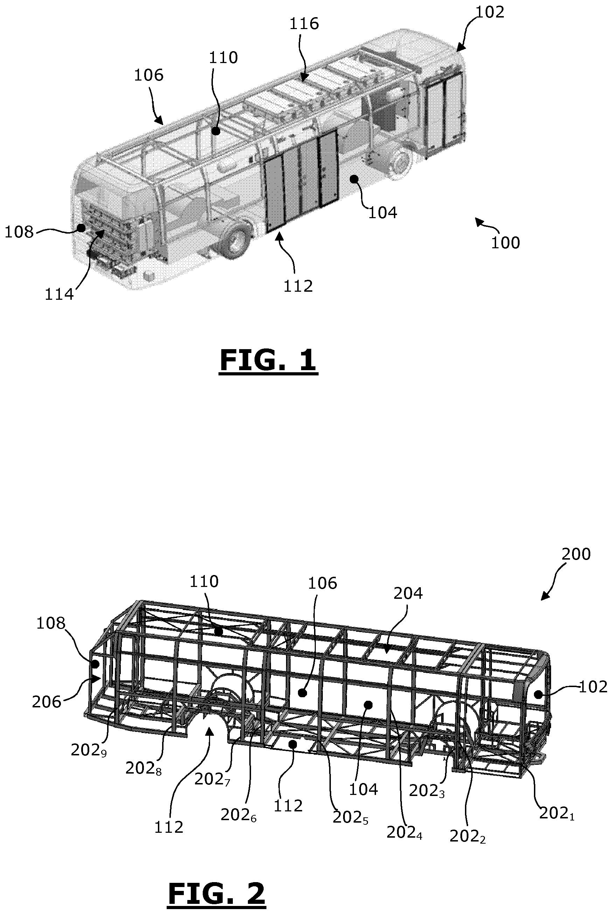

La FIGURE 1 est une représentation schématique d'un véhicule selon l'invention.

Le véhicule 100 représenté sur la FIGURE 1 est un bus électrique comportant une paroi avant 102, deux parois latérales longitudinales 104 et 106, une paroi arrière 108, une paroi supérieure 110 et une paroi inférieure 112.

Le bus électrique comporte un ou plusieurs moteurs électriques (non représentés), des modules 114, dits arrière, de stockage d'énergie électrique, disposés du côté de la paroi arrière 108. Le bus 100 comprend en outre des modules 116, dits supérieurs, de stockage d'énergie électrique, disposés dans un logement aménagé dans la paroi supérieure 110 du bus 100.

La FIGURE 2 est une représentation schématique d'un exemple d'ossature selon l'invention selon une vue isométrique.

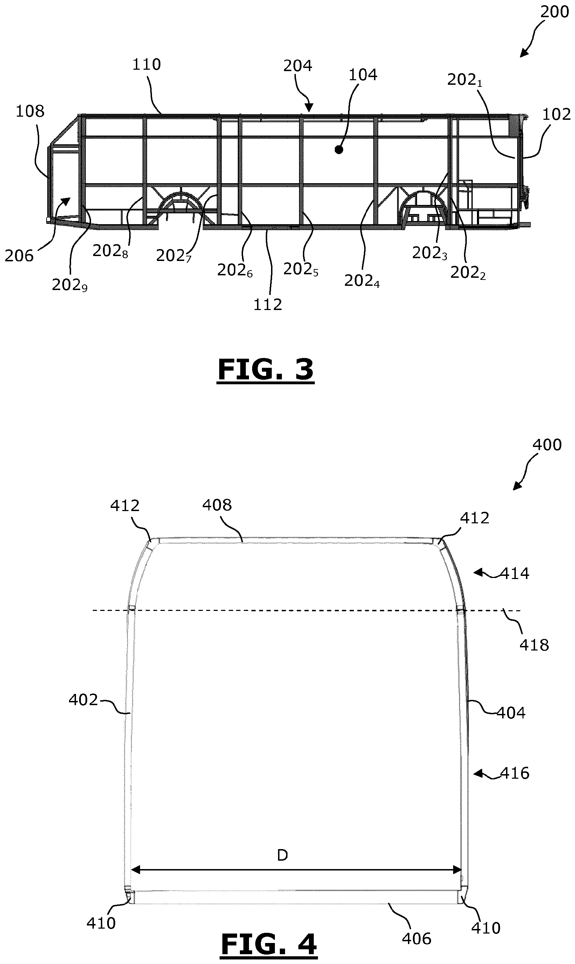

La FIGURE 3 est une représentation schématique de l'ossature de la FIGURE 2 suivant une vue de côté.

L'ossature 200 de la FIGURE 2 est formée par neuf anneaux 202₁-202₉, l'anneau 202₁ se trouvant du côté de la paroi avant 102 de l'ossature 200 et l'anneau 202₉ se trouvant du côté de la paroi arrière 108 de l'ossature 200.

Dans l'exemple représenté, l'ossature 200 comporte, aménagés dans l'épaisseur de la paroi supérieure 110, quatre compartiments 204 prévus chacun pour accueillir un module de stockage d'énergie électrique rechargeable alimentant le ou les moteurs électriques (non représentés) du véhicule. L'ossature 200 comprend en outre, aménagés dans l'épaisseur de la paroi arrière 108, un ou plusieurs compartiments 206 prévus chacun pour accueillir un module de stockage d'énergie électrique rechargeable alimentant le ou les moteurs électriques (non représentés) du véhicule.

Les anneaux 202₁-202₉ sont disposés alignés longitudinalement, parallèles entre eux. Les distances entre deux anneaux 202 pris deux à deux sont variables. Par exemple, les anneaux 202₂ et 202₃ sont collés l'un à l'autre. Les anneaux 202₆ et 202₇ sont séparés d'une distance plus petite comparée à celle séparant les anneaux 202₄ et 202₅.

Chaque anneau 202 définit un plan vertical perpendiculaire à chacune des parois latérales 104 et 106, à la paroi supérieure 110 et à la paroi inférieure 112 de l'ossature. Le plan vertical défini par un anneau 202 est sensiblement parallèle à la paroi avant 102 et à la paroi arrière 108 de l'ossature 200.

Dans l'exemple représenté, chaque anneau 202 est réalisé en acier préalablement traité par cataphorèse contre la corrosion, par exemple par assemblage de tubes creux.

Chaque anneau 202 peut être réalisé par assemblage de pièces avec une connexion de type mâle-femelle.

Les anneaux 202 peuvent présenter des formes et des dimensions identiques ou différentes.

Les anneaux 202 sont reliés entre eux par des éléments, pièces ou profilés longitudinales, verticales ou croisées, de sorte à réaliser une ossature monobloc et rigide.

La FIGURE 4 est une représentation schématique d'un premier exemple d'anneau pouvant être utilisé dans une ossature selon l'invention.

Par exemple, l'anneau 400 représenté sur la FIGURE 4 peut être l'un quelconque des anneaux 202₁-202₃, 202₈ et 202₉ de l'ossature 200 représentée sur les FIGURES 2-3.

L'anneau 400 comprend deux bords verticaux 402 et 404, également appelés montants, définissant les côtés latéraux de l'anneau 400. Le bord latéral 402 se trouve par exemple du côté de la paroi latéral 104 de l'ossature 200 des FIGURES 2-3 et le bord latéral 404 se trouve du côté de la paroi latérale 106 de l'ossature 200 des FIGURES 2-3.

L'anneau 400 comprend aussi un bord inférieur 406, également appelé longeron inférieur, définissant le bas ou le côté bas de l'anneau 400. Le bord inférieur 406 est sensiblement horizontal et se trouve par exemple du côté de la paroi inférieure 112 de l'ossature 200 des FIGURES 2-3. Le bord inférieur 406 définit également l'extrémité inférieure de l'anneau 400.

Enfin, l'anneau 400 comprend aussi un bord supérieur 408, également appelé longeron supérieur, définissant le haut, ou le côté haut de l'anneau 400. Le bord supérieur 408 est sensiblement horizontal et se trouve par exemple du côté de la paroi supérieure 110 de l'ossature 200 des FIGURES 2-3. Le bord supérieur 408 définit l'extrémité supérieure de l'anneau 400.

La connexion entre les bords latéraux 402 et 404 et le bord inférieur 406 est réalisée par soudage, soit directement des pièces réalisant lesdits bords entre eux, soit par l'intermédiaire d'éléments d'interconnexion 410, également appelés profilés longitudinaux inférieurs, disposés au niveau des coins inférieurs, et sur lesquels les pièces réalisant lesdits bords viennent se souder. Alternativement, des éléments d'interconnexion de type mâle-femelle peuvent également être utilisés.

La connexion entre les bords latéraux 402 et 404 et le bord supérieur 408 peut être réalisée par soudage, soit directement des pièces réalisant lesdits bords entre eux, soit d'un ou plusieurs éléments intermédiaires. Dans l'exemple représenté, les bords latéraux 402 et 404 et le bord supérieur 408 sont connectés entre eux, par soudage sur des éléments d'interconnexion 412, également appelés profilés longitudinaux supérieurs, disposés au niveau de chacun des coins supérieurs de l'anneau. Alternativement, des éléments d'interconnexion de type mâle-femelle peuvent également être utilisés.

L'anneau 400 représenté sur la FIGURE 4 est divisé en deux parties : une partie supérieure 414 et une partie inférieure 416, séparées l'une de l'autre suivant un plan horizontal, matérialisé par la ligne 418, plus proche du bord supérieur 408 que du bord inférieur 406. Une telle séparation permet de faciliter la fabrication de l'ossature tout en fragilisant le moins possible ladite ossature, en terme de tenue mécanique.

La partie supérieure 414 et la partie inférieure 416 sont fixées entre elles par une connexion de bout, c'est-à-dire sans chevauchement.

Au niveau de la partie inférieure 416, les bords latéraux, ou montants, verticaux 402 et 404 sont parallèles entre eux et sensiblement rectilignes.

Au niveau de la partie supérieure 414, les bords latéraux, ou montants, verticaux 402 et 404 sont recourbés ou incurvés l'un vers l'autre, c'est-à-dire vers l'intérieur de l'anneau 400. Ainsi, la largeur de l'anneau 400 diminue vers le haut, c'est-à-dire lorsqu'on se rapproche du bord supérieur 408. Ainsi, l'anneau 400 présente une largeur minimum au niveau du bord, ou longeron, supérieur 408.

Les quatre coins de l'anneau 400 de la FIGURE 4 sont arrondis.

Les pièces pour réaliser les montants verticaux 402 et 404, et les longerons horizontaux 406 et 408, de l'anneau 400 peuvent être des barres ou profilés en acier, creux ou pleins.

Tel que visible sur la FIGURE 4, l'anneau 400 comporte un bord supérieur sensiblement plat et horizontal permettant de réaliser une ossature ou un véhicule dont la paroi supérieure 110 est sensiblement plate, ne constituant ainsi aucune résistance au vent.

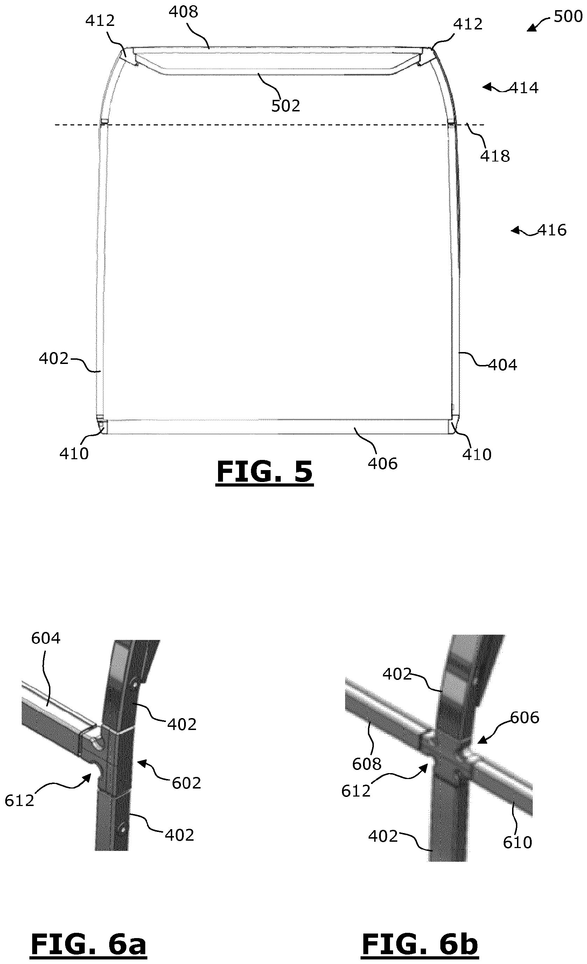

La FIGURE 5 est une représentation schématique d'un deuxième exemple d'anneau pouvant être utilisé dans une ossature selon l'invention.

Par exemple, l'anneau 500 représenté sur la FIGURE 5 peut être l'un quelconque des anneaux 202₄-202₇ de l'ossature 200 représentée sur les FIGURES 2-3.

L'anneau 500, représenté sur la FIGURE 5, comprend l'ensemble des éléments de l'anneau 400 de la FIGURE 4.

En plus, l'anneau 500 comprend, au niveau de son extrémité supérieure, une pièce de liaison, ou longeron, 502 formant une trajectoire incurvée vers l'intérieur de l'anneau 500, à partir de chacun des coins supérieurs de l'anneau. La pièce de liaison 502 relie entre eux les bords latéraux 402 et 404 de l'anneau 500. Cette pièce de liaison forme en quelque sorte un deuxième bord supérieur, vu de l'intérieur de l'anneau 500, et recourbé vers l'intérieur de l'anneau 500.

La pièce de liaison 502 forme un support pour définir, avec au moins un autre anneau similaire ou identique, un logement ou un compartiment au niveau de la paroi supérieure de l'ossature ou du véhicule, tel que par exemple le logement 204 de l'ossature 200 des FIGURES 2-3.

Chaque anneau peut comporter des éléments d'interconnexion d'un anneau avec une pièce longitudinale ou verticale ou encore croisée de l'ossature.

La FIGURE 6a donne un premier exemple d'une pièce d'interconnexion qui peut être utilisée dans l'ossature selon l'invention, par exemple dans l'ossature des FIGURES 2-3.

La pièce 602 représentée sur la FIGURE 6a se présente sous la forme d'un « T ». Chacune des extrémités du « T » comporte un logement femelle pouvant accueillir l'extrémité mâle d'une pièce. Dans l'exemple représenté sur la FIGURE 6a, la pièce 602 est positionnée au niveau du plan 418 de séparation des parties supérieure 414 et inférieure 416 d'un anneau. Deux des extrémités femelles opposées du « T », de part et d'autre de la pièce 602, accueillent les extrémités mâles du montant 402. La troisième extrémité femelle du « T » accueille une pièce longitudinale 604 connectant l'anneau avec un autre anneau ou avec une autre pièce de l'ossature.

La pièce 602 comporte un rétrécissement, ou enlèvement, de matière 612, en particulier pratiqué de manière arrondie ou circulaire, au niveau de chacun des coins formés par les branches du « T » entre-elles. Ces coins correspondant à des zones de concentration de contraintes et un tel rétrécissement de matière augmente la tenue mécanique de la pièce de liaison 602.

La FIGURE 6b donne un deuxième exemple d'une pièce d'interconnexion qui peut être utilisée dans l'ossature selon l'invention, par exemple dans l'ossature des FIGURES 2-3.

La pièce 606 représentée sur la FIGURE 6b se présente sous la forme d'une croix « + ». Chacune des extrémités de la croix « + » comporte un logement femelle pouvant accueillir l'extrémité mâle d'une pièce. Dans l'exemple représenté sur la FIGURE 6b, la pièce 606 est positionnée au niveau du plan 418 de séparation des parties supérieure 414 et inférieure 416 d'un anneau. Deux des extrémités femelles opposées de la croix « + », de part et d'autre de la pièce 606, accueillent les extrémités mâles du montant 402. Les deux autres extrémités femelles opposées de la croix « + » accueillent deux pièces longitudinales 608 et 610 connectant l'anneau avec un autre anneau ou une autre pièce de l'ossature, dans une même direction et dans des sens opposés.

A l'instar de la pièce 602 de la FIGURE 6a, la pièce 606 comporte un rétrécissement, ou enlèvement, de matière 612, en particulier pratiqué de manière arrondie ou circulaire, au niveau de chacun des coins formés par les branches du « + » entre-elles. Ces coins correspondant à des zones de concentration de contraintes et un tel rétrécissement de matière augmente la tenue mécanique de la pièce de liaison 606.

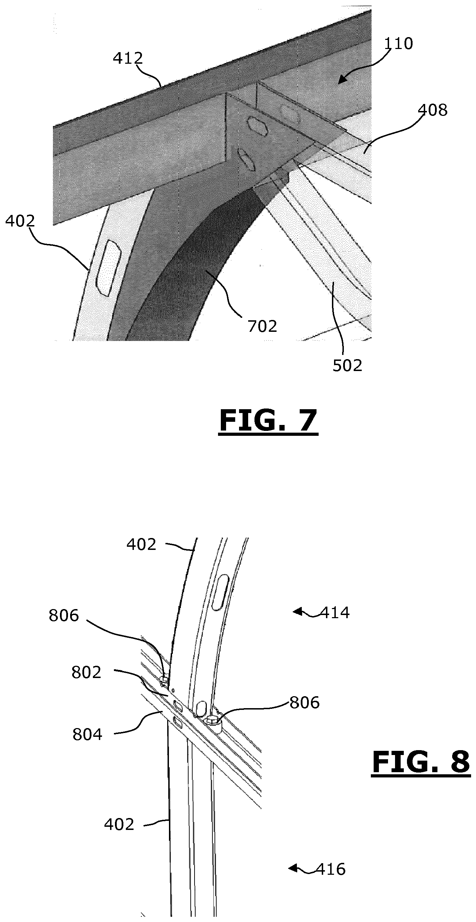

La FIGURE 7 est une représentation schématique partielle d'un autre exemple de liaison non limitatif pouvant être mis en œuvre dans l'ossature selon l'invention.

Plus particulièrement, la FIGURE 7 donne une représentation de la liaison entre le longeron supérieur 408, et éventuellement du longeron 502, avec le montant latéral vertical 402. Tel que représenté sur la FIGURE 7, une pièce de fixation 702, appelée jambe de renfort, est utilisée pour renforcer la fixation du montant latéral vertical 402 avec le longeron 408, et éventuellement avec le longeron 502.

La jambe de renfort 702 est fixée au montant vertical 402, par exemple par soudage, vissage ou boulonnage. Les longerons supérieurs 408 et 502 sont fixés à la jambe de renfort 702 par vissage, soudage ou boulonnage.

Une telle jambe de renfort 702 peut être utilisée pour chaque point de liaison entre le(s) longeron(s) supérieur(s) et un montant vertical composant un anneau. Une telle jambe de renfort peut être utilisée pour chaque anneau, ce dernier comportant ou non un longeron 502.

La FIGURE 8 est une représentation d'un exemple d'assemblage non limitatif d'une partie supérieure et d'une parte inférieure d'un anneau, par exemple des anneaux 400 et 500, pouvant être mis en œuvre dans une ossature selon l'invention.

Tel que représenté sur la FIGURE 8, la partie supérieure 414 d'un anneau 400 ou 500 vient se loger dans un premier profilé 802, dont la section est en forme de « U ». Ce premier profilé 802 est fixé à la partie supérieure de l'anneau par exemple par soudage.

De manière similaire, la partie inférieure 416 de l'anneau 400 ou 500 vient se loger dans un deuxième profilé 804, dont la section est en forme de « U ». Ce deuxième profilé 804 est fixé à la partie inférieure 416, par exemple par soudage.

Le premier profilé 802 et le deuxième profilé 804 sont disposés dos-à-dos ou tête-bêche.

Les profilés 802 et 804 sont ensuite fixés entre eux par une pluralité de boulons 806.

Au moins un des profilés 802 et 804 peut être commun à plusieurs anneaux agencés le long de l'ossature pour la fixation de la partie supérieure et de la partie inférieure de plusieurs anneaux.

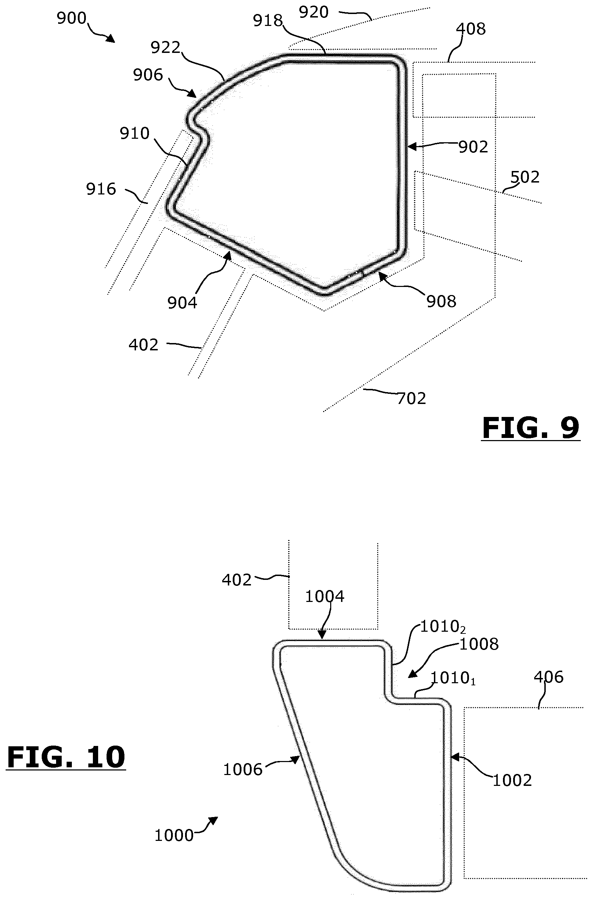

La FIGURE 9 est une représentation schématique, en coupe, d'un exemple de réalisation non limitatif d'un profilé pouvant être utilisé dans un anneau d'une ossature selon l'invention, par exemple des anneaux 400 et 500.

Le profilé 900 représenté sur la FIGURE 9 peut être le profilé 412 des FIGURES 4 et 5.

Le profilé 900 est de section fermée, et peut être creux ou plein. Dans la suite de la demande, le profilé 900 peut être appelé profilé supérieur.

Le profilé supérieur 900 comporte une première face 902 de fixation des longerons 408 et 502 de l'anneau, une deuxième face 904 de fixation du montant 402 de l'anneau, une face extérieure 906 se trouvant du côté opposé à l'intérieur de l'anneau et une face intérieure 908 se trouvant du côté de l'intérieur dudit anneau.

La face extérieure 906 comporte une surface 910 de fixation d'un élément d'habillage de la paroi latérale, tel que par exemple un élément vitré 916. La surface de fixation 910 de l'élément d'habillage forme un décroché dans la face extérieure 906, vers l'intérieur du profilé 900, de sorte que l'élément d'habillage, une fois fixé sur la face extérieure 906, se trouve en continuité de la face extérieure 906 ou ne fasse pas saillie de la face extérieure 906.

Le profilé 900 peut comprendre au niveau de sa face extérieure 906 une surface 918 de fixation d'un élément d'habillage 920 de la paroi supérieure, tel qu'un élément de capotage ou une paroi d'étanchéité.

Le profilé 900 peut en outre comprendre au niveau de sa face extérieure 906, une surface 922, non recouverte par un élément d'habillage et prévue pour former une partie de la surface extérieure du véhicule, en particulier au niveau du coin supérieur du véhicule. Ainsi, il n'est pas nécessaire d'utiliser un élément d'habillage extérieur pour former la surface extérieure du véhicule au niveau de cette zone, la surface 922 étant alors une surface visible de l'extérieur du véhicule (partie de la carrosserie/peau du véhicule).

De plus, la première face 902 est décalée par rapport à la deuxième face 904 suivant une direction perpendiculaire à la première face 902, de sorte que la deuxième face 904 s'arrête avant et à distance de la première face 902 suivant ladite direction perpendiculaire.

Par ailleurs, la deuxième face 904 est décalée par rapport à la première face 902 suivant une direction perpendiculaire à la deuxième face 904, de sorte que la première face 902 s'arrête avant et à distance de la deuxième face 904 suivant ladite direction perpendiculaire.

Les longerons 408, 502 et le montant 402 sont fixés, de bout, sur le profilé 900 directement sans utilisation d'un élément de fixation additionnel, par exemple par soudage.

Le profilé supérieur 900 représenté sur la FIGURE 9 est réalisé par pliage et soudage d'une feuille d'acier d'épaisseur 3mm, ou comprise entre 1mm et 5mm. La ligne de soudage est positionnée, de préférence, au niveau de la face intérieure 908, sur laquelle aucun élément n'est fixé.

Le profilé 900 est, de préférence, traité par cataphorèse contre l'oxydation et la corrosion.

La FIGURE 10 est une représentation schématique, en coupe, d'un exemple de réalisation non limitatif d'un profilé pouvant être utilisé dans un anneau d'une ossature selon l'invention, par exemple des anneaux 400 et 500.

Le profilé 1000 représenté sur la FIGURE 10 peut être le profilé 410 des FIGURES 4 et 5.

Le profilé 1000 est de section fermée, et peut être creux ou plein. Dans la suite de la demande, le profilé 1000 peut être appelé profilé inférieur.

Le profilé inférieur 1000 comporte une première face 1002 de fixation du longeron 406, une deuxième face 1004 de fixation du montant 402, une face extérieure 1006 se trouvant du côté opposé à l'intérieur de l'anneau 400 ou 500 et une face intérieure 1008 opposée à la face extérieure 1006.

La face intérieure 1008 est recourbée vers le profilé 1000. Elle est formée par deux parties 1010₁ et 1010₂, perpendiculaires entre-elles. La partie 1010₁ se trouve du côté de la première face 1002 et est perpendiculaire à la première face 1002 et parallèle à la deuxième face 1004. La partie 1010₂ se trouve du côté de la deuxième face 1004 et est perpendiculaire à la deuxième face 1004 et parallèle à la première face 1002.

Ainsi, la largeur et la hauteur de l'anneau sont optimisées, ce qui permet d'augmenter la largeur et la hauteur de l'habitacle.

La première face 1002 est perpendiculaire à la deuxième face 1004.

De plus, la première face 1002 est décalée par rapport à la deuxième face 1004 suivant une direction perpendiculaire à la première face 1002, de sorte que la deuxième face 1004 s'arrête avant et à distance de la première face 1002 suivant ladite direction perpendiculaire.

Par ailleurs, la deuxième face 1004 est décalée par rapport à la première face 1002 suivant une direction perpendiculaire à la deuxième face 1004, de sorte que la première face 1002 s'arrête avant et à distance de la deuxième face 1004 suivant ladite direction perpendiculaire.

Dans l'exemple représenté, la première face 1002 est perpendiculaire à la direction définie par le longeron 406. Le longeron 406 est fixé au profilé 1000 de bout, c'est-à-dire sans se chevaucher avec aucune partie du profilé 1000.

Par ailleurs, la deuxième face 1004 est perpendiculaire à la direction définie par le montant 402. Le montant 402 est fixé au profilé 1000 de bout, c'est-à-dire sans se chevaucher avec aucune partie du profilé 1000.

Le montant 402 et le longeron 406 sont fixés sur le profilé 1000 directement sans utilisation d'un élément de fixation additionnel. Par exemple, le longeron 406 et le montant 402 sont fixés sur le profilé 1000 par soudage.

Le profilé inférieur 1000 représenté sur la FIGURE 10 est réalisé par pliage et soudage d'une feuille d'acier d'épaisseur 3mm, ou comprise entre 1mm et 5mm.

La ligne de soudage est, par exemple, positionnée au niveau de la deuxième face 1004. Alternativement, la ligne de soudage peut être positionnée au niveau de la première face 1002.

Le profilé 1000 est traité par cataphorèse contre l'oxydation et la corrosion.

Bien entendu, l'invention n'est pas limitée aux exemples qui viennent d'être décrits.

En particulier, le nombre de modules de stockage n'est pas limité à quatre, et correspond au maximum de modules de stockage d'énergie dépendant notamment du poids du véhicule et de l'autonomie jugée suffisante pour le fonctionnement du véhicule.

De plus, l'invention n'est pas limitée aux bus et peut par exemple être appliquée aux cars, tram-bus et d'autres véhicules de transport en commun, en particulier terrestre, et encore plus particulièrement sur route.

## Revendications

1. Ossature (200) pour véhicule (100) terrestre de transport en commun de passagers, en particulier de type bus, comprenant au moins deux anneaux (202₁-202₉, 400 ,500) rigides faisant le tour de ladite ossature (200) dans le sens de la largeur, autour d'un habitacle défini par ladite ossature (200) ; **caractérisée en ce qu'**au moins un, en particulier chaque, anneau (202₁-202₉, 400, 500) est obtenu par assemblage, en particulier par soudage, d'une partie supérieure (414) et d'une partie inférieure (416) suivant un plan horizontal (418) d'assemblage :
- perpendiculaire au plan formé par ledit anneau (202₁-202₉, 400, 500), et
- situé entre un bord supérieur (408) et un bord inférieur (406) dudit anneau (202₁-202₉, 400, 500) et à distance desdits bords (406, 408), entre 7/10 et 9/10 de la hauteur totale de l'anneau.

2. Ossature (200) selon la revendication précédente, **caractérisée en ce qu'**elle comprend un nombre d'anneaux rigides (202₁-202₉, 400, 500) compris entre 2 et 15, et en particulier entre 7 et 12.

3. Ossature (200) selon l'une quelconque des revendications précédentes, **caractérisée en ce qu'**au moins un, en particulier chaque, anneau (202₁-202₉, 400, 500) définit un plan vertical perpendiculaire à au moins une, en particulier chaque, paroi latérale (104, 106) de ladite ossature (200).

4. Ossature (200) selon l'une quelconque des revendications précédentes, **caractérisée en ce qu'**au moins deux, en particulier tous les, anneaux (202₁-202₉, 400, 500) sont alignés les uns derrière les autres, chaque anneau (202₁-202₉, 400, 500) définissant un plan parallèle au plan défini par un autre anneau (202₁-202₉, 400, 500).

5. Ossature (200) selon l'une quelconque des revendications précédentes, **caractérisée en ce qu'**au moins un, en particulier chaque, anneau (202₁-202₉) présente une largeur plus faible au niveau de son extrémité supérieure comparée au reste dudit anneau (202₁-202₉, 400, 500), et en particulier comparée à une extrémité inférieure dudit anneau (202₁-202₉, 400, 500).

6. Ossature (200) selon l'une quelconque des revendications précédentes, **caractérisée en ce qu'**au moins un, en particulier chaque, anneau (202₁-202₉, 400, 500) est formé par assemblage de plusieurs pièces, au moins une, en particulier chacune desdites pièces, étant connectée à au moins une autre pièce par soudage de bout, ou boulonnage, ou encore par une liaison mâle-femelle.

7. Ossature (200) selon l'une quelconque des revendications précédentes, **caractérisée en ce qu'**au moins un, en particulier chaque, anneau (202₁-202₉, 400, 500) comporte au moins une forme ou pièce d'interconnexion (602, 606), dite nœud, mâle ou femelle, pour relier ledit anneau (202₁-202₉, 400, 500) avec un autre anneau (202₁-202₉, 400, 500) ou une autre pièce de ladite ossature (200) par une connexion de type mâle-femelle.

8. Ossature (200) selon l'une quelconque des revendications précédentes, **caractérisée en ce qu'**au moins un, en particulier chaque, anneau (202₁-202₉, 400, 500) comporte un bord supérieur sensiblement plat.

9. Ossature (200) selon l'une quelconque des revendications précédentes, **caractérisée en ce qu'**au moins un, en particulier chaque, anneau (500) comporte un bord supérieur replié/recourbé vers l'intérieur dudit anneau (500), en particulier à partir de chacun de ses coins supérieurs.

10. Ossature (200) selon l'une quelconque des revendications 8 ou 9, **caractérisée en ce qu'**au moins un, en particulier chaque, anneau (500) comporte au niveau de son extrémité supérieure :
- une première pièce de liaison (408), sensiblement horizontale, reliant des montants latéraux verticaux (402, 404) dudit anneau (500) suivant une trajectoire sensiblement horizontale, ladite première pièce de liaison (408) formant un bord supérieur extérieur sensiblement plat, et/ou
- une deuxième pièce de liaison (502), formant une trajectoire incurvée vers l'intérieur dudit anneau, en particulier à partir de chacun des coins supérieurs dudit anneau (500), et reliant les montants latéraux verticaux (402, 404) dudit anneau (500), ladite deuxième pièce de liaison (502) formant un bord supérieur intérieur recourbé vers l'intérieur de l'anneau.

11. Ossature (200) selon l'une quelconque des revendications précédentes, **caractérisée en ce qu'**au moins un, en particulier chaque, anneau (202₁-202₉, 400, 500) comporte un plan de symétrie verticale passant par le centre dudit anneau (202₁-202₉, 400, 500) déterminé dans le sens de la largeur dudit anneau (202₁-202₉, 400, 500).

12. Ossature (200) selon l'une quelconque des revendications précédentes, **caractérisée en ce qu'**au moins un, en particulier chaque, anneau (202₁-202₉, 400, 500) est réalisé, au moins en partie, en acier.

13. Ossature (200) selon l'une quelconque des revendications précédentes, **caractérisée en ce qu'**elle comprend, pour au moins un anneau, au moins une pièce de fixation, dite jambe de renfort, prenant appui sur un montant latéral vertical dudit anneau et formant appui pour un montant supérieur, ou un bord supérieur, formant ledit anneau.

14. Ossature (200) selon l'une quelconque des revendications précédentes, **caractérisée en ce qu'**elle comprend, un profilé longitudinal (900), dit supérieur, de section fermée, reliant au moins deux, en particulier tous les, anneaux (400, 500) entre eux, au niveau d'au moins un, en particulier de chaque, coin supérieur de chacun desdits anneaux (400, 500), ledit profilé supérieur (900) comprenant :
- une première face (902) pour la fixation d'au moins un longeron horizontal (408, 502) de chacun desdits anneaux (400, 500) formant un bord supérieur dudit anneau (400, 500),
- une deuxième face (904) pour la fixation d'un montant (402, 404) de chacun desdits anneaux (400, 500) formant un bord latéral dudit anneau (400, 500),
- une face (906), dite extérieure, se trouvant entre ladite première face (902) et ladite deuxième face (904) et, en utilisation, du côté extérieur par rapport à l'habitacle ;
ladite face extérieure (906) comprenant au moins une surface (910), dite de fixation, pour la fixation d'un élément d'habillage extérieur (916), formant un décroché dans ladite face extérieure (906), vers l'intérieur dudit profilé supérieur (900).

15. Ossature (200) selon l'une quelconque des revendications précédentes, **caractérisée en ce qu'**elle comprend, un profilé longitudinal (1000), dit inférieur, de section fermée, reliant au moins deux anneaux (400, 500) entre eux, au niveau d'un, en particulier de chaque, coin inférieur de chacun desdits anneaux (400, 500), ledit profilé inférieur (1000) comprenant :
- une première face (1002) pour la fixation d'au moins un longeron horizontal (406) de chacun desdits anneaux (400, 500) formant un bord inférieur dudit anneau (400, 500), et
- une deuxième face (1004) pour la fixation d'un montant (402, 404) de chacun desdits anneaux (400, 500) formant un bord latéral dudit anneau (400, 500) ;
au moins l'une (1002, 1004) desdites faces est décalée par rapport à l'autre (1004, 1002) desdites faces suivant une direction perpendiculaire à ladite une face (1002, 1004), de sorte que ladite autre face (1004, 1002) s'arrête avant, et à distance de, ladite une face (1002, 1004) suivant ladite direction perpendiculaire.

16. Véhicule (100) terrestre de transport en commun, en particulier sur route, et en particulier électrique, comprenant une ossature (200) selon l'une quelconque des revendications précédentes.

17. Véhicule selon la revendication précédente, **caractérisé en ce qu'**il s'agit d'un bus, un car, ou un tram-bus, en particulier électrique.

## Patentansprüche

1. Tragrahmen (200) für ein Landfahrzeug (100) des öffentlichen Personenverkehrs, insbesondere vom Typ Bus, mit wenigstens zwei starren Ringen (202₁-202₉, 400, 500), die den Tragrahmen (200) in der Richtung der Breite, um eine durch den Tragrahmen (200) definierte Fahrgastzelle herum, umlaufen;
**dadurch gekennzeichnet, dass** wenigstens ein, insbesondere jeder Ring (202₁-202₉, 400, 500) durch Zusammenfügen, insbesondere durch Schweißen, eines oberen Teils (414) und eines unteren Teils (416) entlang einer horizontalen Verbindungsebene (418) erhalten wird:
- die senkrecht zu der durch den Ring (202₁-202₉, 400, 500) gebildeten Ebene verläuft und
- die zwischen einer oberen Kante (408) und einer unteren Kante (406) des Rings (202₁-202₉, 400, 500) sowie im Abstand von den Kanten (406, 408) zwischen 7/10 und 9/10 der Gesamthöhe des Rings gelegen ist.

2. Tragrahmen (200) nach dem vorhergehenden Anspruch, **dadurch gekennzeichnet, dass** er eine Anzahl von starren Ringen (202₁-202₉, 400, 500) zwischen 2 und 15 und insbesondere zwischen 7 und 12 umfasst.

3. Tragrahmen (200) nach einem der vorhergehenden Ansprüche, **dadurch gekennzeichnet, dass** wenigstens ein, insbesondere jeder Ring (202₁-202₉, 400, 500) eine vertikale Ebene senkrecht zu wenigstens einer, insbesondere jeder Seitenwand (104, 106) des Tragrahmens (200) definiert.

4. Tragrahmen (200) nach einem der vorhergehenden Ansprüche, **dadurch gekennzeichnet, dass** wenigstens zwei, insbesondere alle Ringe (202₁-202₉, 400, 500) hintereinander ausgerichtet sind, wobei jeder Ring (202₁-202₉, 400, 500) eine Ebene definiert, welche zu der durch einen anderen Ring (202₁-202₉, 400, 500) definierten Ebene parallel verläuft.

5. Tragrahmen (200) nach einem der vorhergehenden Ansprüche, **dadurch gekennzeichnet, dass** wenigstens ein, insbesondere jeder Ring (202₁-202₉) im Bereich seines oberen Endes, verglichen mit dem restlichen Ring (202₁-202₉, 400, 500), und insbesondere verglichen mit einem unteren Ende des Rings (202₁-202₉, 400, 500), eine geringere Breite aufweist.

6. Tragrahmen (200) nach einem der vorhergehenden Ansprüche, **dadurch gekennzeichnet, dass** wenigstens ein, insbesondere jeder Ring (202₁-202₉, 400, 500) durch Zusammenfügen mehrerer Teile gebildet ist, wobei wenigstens ein, insbesondere jedes der Teile durch Stumpfschweißen oder Verschrauben oder aber durch eine Steckverbindung mit wenigstens einem anderen Teil verbunden ist.

7. Tragrahmen (200) nach einem der vorhergehenden Ansprüche, **dadurch gekennzeichnet, dass** wenigstens ein, insbesondere jeder Ring (202₁-202₉, 400, 500) wenigstens ein(e) Steckverbindungsform oder -stück (602, 606), sogenannten Knoten, aufweist, um den Ring (202₁-202₉, 400, 500) mit einem anderen Ring (202₁-202₉, 400, 500) oder einem anderen Teil des Tragrahmens (200) durch eine Verbindung vom Steck-Typ zu verbinden.

8. Tragrahmen (200) nach einem der vorhergehenden Ansprüche, **dadurch gekennzeichnet, dass** wenigstens ein, insbesondere jeder Ring (202₁-202₉, 400, 500) eine im Wesentlichen flache obere Kante aufweist.

9. Tragrahmen (200) nach einem der vorhergehenden Ansprüche, **dadurch gekennzeichnet, dass** wenigstens ein, insbesondere jeder Ring (500) eine obere Kante aufweist, die zur Innenseite des Rings (500), insbesondere von jeder seiner oberen Ecken aus, umgeschlagen/umgebogen ist.

10. Tragrahmen (200) nach einem der Ansprüche 8 oder 9, **dadurch gekennzeichnet, dass** wenigstens ein, insbesondere jeder Ring (500) im Bereich seines oberen Endes aufweist:
- ein im Wesentlichen horizontales erstes Verbindungsstück (408), das vertikale seitliche Pfosten (402, 404) des Rings (500) entlang eines im Wesentlichen horizontalen Weges verbindet, wobei das erste Verbindungsstück (408) eine im Wesentlichen flache äußere obere Kante bildet, und/oder
- ein zweites Verbindungsstück (502), das eine gekrümmte Bahn zur Innenseite des Rings bildet, insbesondere von jeder der oberen Ecken des Rings (500) aus, und das die vertikalen seitlichen Pfosten (402, 404) des Rings (500) verbindet, wobei das zweite Verbindungsstück (502) eine innere obere Kante bildet, die zur Innenseite des Rings hin umgebogen ist.

11. Tragrahmen (200) nach einem der vorhergehenden Ansprüche, **dadurch gekennzeichnet, dass** wenigstens ein, insbesondere jeder Ring (202₁-202₉, 400, 500) eine durch die Mitte des Rings (202₁-202₉, 400, 500) verlaufende vertikale Symmetrieebene aufweist, bestimmt in der Richtung der Breite des Rings (202₁-202₉, 400, 500).

12. Tragrahmen (200) nach einem der vorhergehenden Ansprüche, **dadurch gekennzeichnet, dass** wenigstens ein, insbesondere jeder Ring (202₁-202₉, 400, 500) wenigstens teilweise aus Stahl gefertigt ist.

13. Tragrahmen (200) nach einem der vorhergehenden Ansprüche, **dadurch gekennzeichnet, dass** er für wenigstens einen Ring wenigstens ein Befestigungsstück, sogenannte Verstärkungsstrebe, umfasst, das sich an einem vertikalen seitlichen Pfosten des Rings abstützt und eine Anlage für eine(n) den Ring bildenden oberen Pfosten, oder obere Kante, bildet.

14. Tragrahmen (200) nach einem der vorhergehenden Ansprüche, **dadurch gekennzeichnet, dass** er ein Längs-, sogenanntes oberes, Profil (900) mit geschlossenem Querschnitt umfasst, das wenigstens zwei, insbesondere alle Ringe (400, 500) im Bereich von wenigstens einer, insbesondere jeder oberen Ecke eines jeden der Ringe (400, 500) untereinander verbindet, wobei das obere Profil (900) umfasst:
- eine erste Seite (902) zum Befestigen von wenigstens einem horizontalen Längsträger (408, 502) eines jeden der Ringe (400, 500), der eine obere Kante des Rings (400, 500) bildet,
- eine zweite Seite (904) zum Befestigen eines Pfostens (402, 404) eines jeden der Ringe (400, 500), der eine Seitenkante des Rings (400, 500) bildet,
- eine sogenannte äußere Seite (906), die sich zwischen der ersten Seite (902) und der zweiten Seite (904) sowie im Gebrauch auf der Außenseite in Bezug auf die Fahrgastzelle befindet,
wobei die äußere Seite (906) wenigstens eine sogenannte Befestigungsfläche (910) zum Befestigen eines äußeren Verkleidungselements (916) umfasst, die in der äußeren Seite (906) zur Innenseite des oberen Profils (900) einen Absatz in der äußeren Seite (906) bildet.

15. Tragrahmen (200) nach einem der vorhergehenden Ansprüche, **dadurch gekennzeichnet, dass** er ein Längs-, sogenanntes unteres, Profil (1000) mit geschlossenem Querschnitt umfasst, das wenigstens zwei Ringe (400, 500) im Bereich von wenigstens einer, insbesondere jeder unteren Ecke eines jeden der Ringe (400, 500) untereinander verbindet, wobei das untere Profil (1000) umfasst:
- eine erste Seite (1002) zum Befestigen von wenigstens einem horizontalen Längsträger (406) eines jeden der Ringe (400, 500), der eine untere Kante des Rings (400, 500) bildet, und
- eine zweite Seite (1004) zum Befestigen eines Pfostens (402, 404) eines jeden der Ringe (400, 500), der eine Seitenkante des Rings (400, 500) bildet,
wenigstens eine (1002, 1004) der Seiten gegenüber der anderen (1004, 1002) der Seiten in einer Richtung senkrecht zu der einen Seite (1002, 1004) versetzt ist, so dass die andere Seite (1004, 1002) in der senkrechten Richtung vor und im Abstand von der einen Seite (1002, 1004) aufhört.

16. Landfahrzeug (100) des öffentlichen Verkehrs, insbesondere auf der Straße und insbesondere elektrisch, umfassend einen Tragrahmen (200) nach einem der vorhergehenden Ansprüche.

17. Fahrzeug nach dem vorhergehenden Anspruch, **dadurch gekennzeichnet, dass** es sich um einen Bus, einen Reisebus oder einen Tram-Bus, insbesondere einen elektrischen handelt.

## Claims

1. A body structure (200) for a passenger public transport land vehicle (100), in particular of the bus type, comprising at least two rigid rings (202₁-202₉,400,500) encircling said body structure (200) in the widthwise direction, around a passenger compartment defined by said body structure (200); **characterized in that** at least one, in particular each ring (202₁-202₉,400,500) is obtained by assembling, in particular by welding, an upper part (414) and a lower part (416) according to a horizontal plane of assembly (418):
- perpendicular to the plane formed by said ring (202₁-202₉,400,500), and
- situated between an upper edge (408) and a lower edge (406) of said ring (202₁-202₉,400,500) and at a distance from said edges (406,408), between 7/10 and 9/10 of the total height of the ring.

2. The body structure (200) according to the preceding claim, **characterized in that** it comprises a number of rigid rings (202₁-202₉,400,500) comprised between 2 and 15, and in particular between 7 and 12.

3. The body structure (200) according to any one of the preceding claims, **characterized in that** at least one, in particular each, ring (202₁-202₉,400,500) defines a vertical plane perpendicular to at least one, in particular each, side panel (104,106) of said body structure (200).

4. The body structure (200) according to any one of the preceding claims, **characterized in that** at least two, in particular all, of the rings (202₁-202₉,400,500) are aligned behind one another, each ring (202₁-202₉,400,500) defining a plane parallel to the plane defined by another ring (202₁-202₉,400,500).

5. The body structure (200) according to any one of the preceding claims, **characterized in that** at least one, in particular each, ring (202₁-202₉) has a smaller width at its upper end in comparison to the rest of said ring (202₁-202₉, 400, 500), and in particular in comparison to a lower end of said ring (202₁-202₉,400,500) .

6. The body structure (200) according to any one of the preceding claims, **characterized in that** at least one, in particular each, ring (202₁-202₉,400,500) is formed by assembling several parts, at least one, in particular each, of said parts being connected to at least one other part by butt welding, or bolting, or by a male-female connection.

7. The body structure (200) according to any one of the preceding claims, **characterized in that** at least one, in particular each, ring (202₁-202₉,400,500) comprises at least one male or female interconnecting shape or part (602,606), called panel point, for connecting said ring (202₁-202₉, 400, 500) to another ring (202₁-202₉, 400, 500) or another part of said body structure (200) by a connection of the male-female type.

8. The body structure (200) according to any one of the preceding claims, **characterized in that** at least one, in particular each, ring (202₁-202₉,400,500) comprises a substantially flat upper edge.

9. The body structure (200) according to any one of the preceding claims, **characterized in that** at least one, in particular each, ring (500) comprises an upper edge folded/curved towards the inside of said ring (500), in particular from each of its upper corners.

10. The body structure (200) according to any one of claims 8 or 9, **characterized in that** at least one, in particular each, ring (500) comprises at its upper end:
- a first connecting part (408), substantially horizontal, connecting vertical side uprights (402,404) of said ring (500) according to a substantially horizontal trajectory, said first connecting part (408) forming a substantially flat outer upper edge, and/or
- a second connecting part (502), forming a incurved trajectory towards the inside of said ring, in particular starting from each of the upper corners of said ring (500) and connecting vertical side uprights (402, 404) of said ring (500), said second connecting part (502) forming an inner upper edge curved towards the inside of the ring.

11. The body structure (200) according to any one of the preceding claims, **characterized in that** at least one, in particular each, ring (202₁-202₉,400,500) comprises a vertical plane of symmetry passing through the centre of said ring (202₁-202₉,400,500) determined in the widthwise direction of said ring (202₁-202₉,400,500).

12. The body structure (200) according to any one of the preceding claims, **characterized in that** at least one, in particular each, ring (202₁-202₉,400,500) is at least partly made from steel.

13. The body structure (200) according to any one of the preceding claims, **characterized in that** it comprises, for at least one ring, at least one fastening part, called reinforcement strut, supported on a vertical side upright of said ring and forming support for an upper upright, or an upper edge, forming said ring.

14. The body structure (200) according to any one of the preceding claims, **characterized in that** it comprises a longitudinal profile (900) having a closed cross-section, called upper profile, connecting at least two, in particular all, the rings (400,500) to one another, at at least one, in particular each, upper corner of each of said rings (400,500), said upper profile (900) comprising:
- a first face (902) for fastening at least one horizontal longitudinal member (408,502) of each of said rings (400,500) forming an upper edge of said ring (400, 500),
- a second face (904) for fastening an upright (402 404) of each of said rings (400,500) forming a side edge of said ring (400, 500),
- a face (906), called outer face, located between said first face (902) and said second face (904) and, in use, on the outer side with respect to the passenger compartment;
said outer face (906) comprising at least one surface (910), called fastening surface, for fastening an outer trim element (916), forming an inset in said outer face (906) towards the inside of said upper profile (900).

15. The body structure (200) according to any one of the preceding claims, **characterized in that** it comprises a longitudinal profile (1000) having a closed cross-section, called lower profile, connecting at least two rings (400, 500) to one another, at one, in particular each lower corner of each of said rings (400,500), said lower profile (1000) comprising:
- a first face (1002) for fastening at least one horizontal longitudinal member (406) of each of said rings (400,500) forming a lower edge of said ring (400, 500), and
- a second face (1004) for fastening an upright (402, 404) of each of said rings (400, 500) forming a side edge of said ring (400, 500);
at least one (1002, 1004) of said faces is offset with respect to the other (1004, 1002) of said faces in a direction perpendicular to said one face (1002, 1004), so that said other face (1004, 1002) stops before and at a distance from said one face (1002, 1004) in said perpendicular direction.

16. A public transport land vehicle (100), in particular road vehicle, and in particular electric, comprising a body structure (200) according to any one of the preceding claims.

17. The vehicle according to the preceding claim, **characterized in that** it is a bus, a coach or a tyred tram, in particular electric.
